Europäisches Patentamt

European Patent Office

Office européen des brevets

(19)

(11) Numéro de publication: **0 008 967**
**B1**

(12) **FASCICULE DE BREVET EUROPEEN**

(45) Date de publication du fascicule de brevet: **05.08.81**

(51) Int. Cl.³: **G 01 T 7/02, G 01 N 15/02**

(21) Numéro de dépôt: **79400559.5**

(22) Date de dépôt: **07.08.79**

(54) **Dispositif d'analyse de l'activité d'un aérosol radioactif en fonction de la granulométrie de ses particules.**

(30) Priorité: **29.08.78 FR 7824885**

(43) Date de publication de la demande:
**19.03.80 Bulletin 80/6**

(45) Mention de la délivrance du brevet:
**05.08.81 Bulletin 81/31**

(84) Etats Contractants Désignés:
**BE DE GB IT**

(56) Documents cités:
**DE - C - 586 026**
**US - A - 3 693 457**

**IEEE TRANSACTION OU NUCLEAR SCIENCE Vol,
NS—19, n° 1, février 1972 New York US
O.B. RAABE: "Instruments and methods for
characterizing radioactive aerosols", pages
64—75.**

**NUCLEAR INSTRUMENTS AND METHODS Vol,
65, n° 1, 15 octobre 1968 Amsterdam NL
J.C NIRSCHL et G.F. HEALEY: "Multidecade
hybrid radiation survey meter" pages 61—71**

**NUCLEONICS, Vol, 17, n° 8, août 1959
New York US
H.A. BROWN et J.V. ROGERS: "Transistorized
Area Monitor Uses G-M-Ion-Chamber Probe",
pages 88—90**

(73) Titulaire: **COMMISSARIAT A L'ENERGIE
ATOMIQUE Etablissement de Caractère
Scientifique Technique et Industriel
B.P. 510
F-75752 Paris Cedex 15 (FR)**

(72) Inventeur: **Madelaine, Guy
8, Résidence du Moulin de la Planche
F-91120 Villebon sur Yvette (FR)**
Inventeur: **Pourprix, Michel
10, Avenue du Général de Gaulle
F-94240 L'Hay les Roses (FR)**

(74) Mandataire: **Mongredien, André et al,
c/o Brevatome 25, rue de Ponthieu
F-75008 Paris (FR)**

Courier Press, Leamington Spa, England.

Dispositif d'analyse de l'activité d'un aérosol radioactif en fonction de la granulométrie de ses particules.

La présente invention a pour objet un dispositif d'analyse de l'activité d'un aérosol radioactif en fonction de la granulométrie de ses particules.

Ce dispositif d'analyse est plus particulièrement adapté à une évaluation rapide de l'activité des particules inhalables se trouvant en suspension dans l'air d'un local susceptible d'être contaminé. En effet, la pénétration dans l'organisme humain par les voies respiratoires des différentes particules constitutives d'un aérosol est directement fonction de leur granulométrie; c'est la raison pour laquelle il est très utile, pour évaluer le risque de contamination encouru, de dresser le spectre de leur activité en fonction de leur granulométrie.

On rappelle que pour effectuer l'analyse de l'activité d'un aérosol radioactif en fonction de la granulométrie de ses particules, il est nécessaire d'effectuer successivement la séparation des particules de l'aérosol en lots de particules d'une granulométrie donnée et la détermination de l'activité de chacun des lots de particules.

Pour la séparation des particules d'un aérosol en lots de particules d'une granulométrie donnée, on utilise habituellement un dispositif connu sous le nom "d'impacteur en cascades". Un tel impacteur comporte à l'intérieur d'une enceinte étanche une pluralité d'étages destinés chacun à collecter des particules d'une granulométrie donnée lorsqu'un aérosol est mis en circulation à travers l'enceinte, chaque étage comprenant une plaque d'injection de l'aérosol, cette plaque étant percée d'au moins un orifice calibré et une plaque de collection des particules. (IEEE Trans. Nucl. Science Vol. NS—19 No 1 1972 pp. 64—75).

Cependant, ces "impacteurs" ne permettent pas d'effectuer directement la mesure de l'activité des particules d'un étage sans intervention manuelle à l'intérieur de ce denier.

Ainsi, il était nécessaire antérieurement à l'invention de procéder au démontage du plateau de collection d'une étage pour effecteur, par exemple, au moyen d'un photomultiplicateur, la mesure de l'activité radioactive des particules collectées dans cet étage.

De ce fait, antérieurement à l'invention, il n'était pas possible d'effectuer rapidement en toute sécurité et avec précision, l'analyse de l'activité d'un aérosol radioactif en fonction de la granulométrie de ses particules.

La présente invention a précisément pour objet un dispositif d'analyse de l'activité d'un aérosol radioactif en fonction de la granulométrie des particules de ce dernier, permettant de remédier au problème précité.

Ce dispositif d'analyse du type comportant une enceinte étanche, des moyens pour mettre en circulation l'aérosol à travers ladite enceinte et à l'intérieur de cette dernière, une pluralité d'étages de collection de particules de l'aérosol d'une granulométrie donnée, chacun des étages comprenant une plaque d'injection de l'aérosol, cette plaque étant percée d'au moins un orifice calibré, et une plaque de collection de particules d'une granulométrie donnée, se caractérisé en ce qu'il comporte des moyens pour établir un champ électrique entre les plaques d'injection et de collection de chacun des étages en vue de l'établissement d'un courant d'ionisation à travers un étage lors de la désintégration des particules collectées dans ce dernier, et des moyens pour mesurer le courant d'ionisation de l'un desdits étages.

Le dispositif d'analyse tel que caractérisé ci-dessus, tire avantageusement profit de la transformation de chacun des étages d'un impacteur en une chambre d'ionisation. En effet, il a ainsi l'avantage de permettre une mesure rapide et précise de l'activité des particules d'un étage sans nécessiter d'interventions manuelles à l'intérieur de ce dernier.

Ainsi, il est particulièrement adapté à un contrôle de l'air d'un local susceptible d'être contaminé.

Dès à présent, on précise que le dispositif de l'invention permet l'analyse de l'activité $\alpha$ ou $\beta$ d'un aérosol.

Selon un premier mode de réalisation du dispositif de l'invention, plus particulièrement destiné à la mesure de faibles activités, les moyens de mesure du courant d'ionisation de l'un desdits étages comportent des moyens de comptage d'impulsions de courant et des moyens pour relier ces moyens de comptage à l'un desdits étages.

Selon un autre mode de réalisation du dispositif de l'invention destiné à la mesure d'activités plus fortes, les moyens de mesure du courant d'ionisation d'un étage comportent des moyens de mesure d'un courant moyen et des moyens pour relier ces moyens de mesure à l'un desdits étages.

Selon une réalisation préférentielle du dispositif de l'invention permettant des mesures dans une gamme étendue d'activités, les moyens de mesure du courant d'ionisation d'un étage comprennent des moyens de mesure d'un courant moyen, des moyens de comptage d'impulsions de courant, et des moyens pour relier soit les moyens de mesure d'un courant moyen, soit les moyens de comptage d'impulsions de courant à l'un desdits étages.

D'autres caractéristiques et avantages de la présente invention apparaîtront plus clairement à la lecture de la description qui suit d'un exemple de réalisation du dispositif de l'invention donné à titre illustratif mais nullement limitatif.

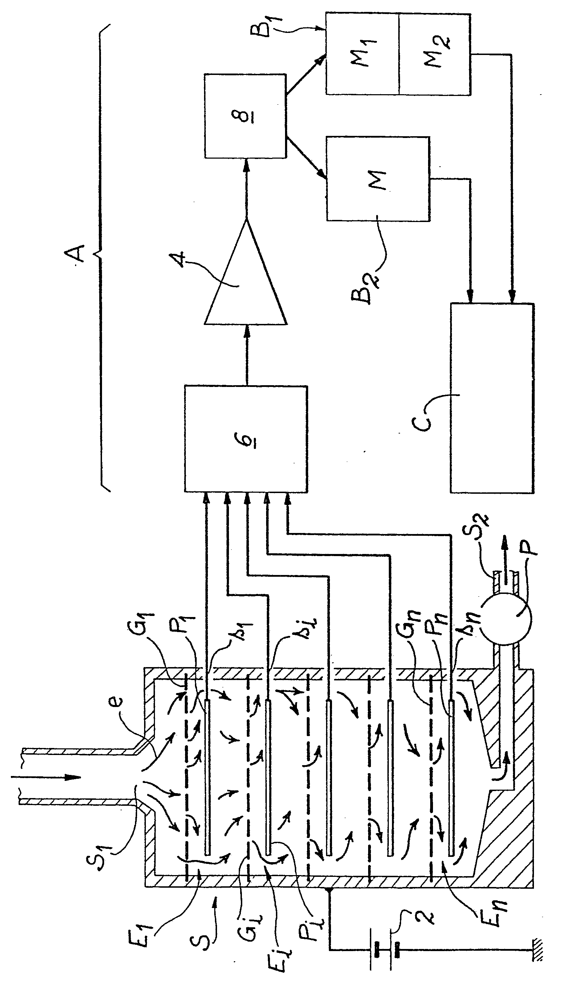

Cette description sera faite en regard de la figure unique schématique annexée sur laquelle on a représenté un schéma d'ensemble du dispositif d'analyse de l'invention.

On voit sur la figure annexée que le dispositif d'analyse de l'invention se compose essentiellement d'une enceinte S de séparation des particules d'un aérosol en lots de particules d'une granulométrie donnée et d'un ensemble A de détermination de l'activité de chacun des lots de particules.

Plus précisément, l'enceinte de séparation S équipée de moyens tels qu'une pompe P placée en aval pour l'établissement entre son entrée $S_1$ et sa sortie $S_2$, d'un écoulement $e$ d'aérosol est subdivisée en une pluralité d'étages $E_1$, $E_i$ ... $E_n$ destinés chacun à collecter un lot de particules d'une granulométrie donnée.

Chaque étage $E_i$ se compose d'une plaque ou grille $G_i$ percée d'orifices calibrés par laquelle l'aérosol est injecté dans l'étage $E_i$ et d'une plaque $P_i$ de collection de particules d'une granulométrie donnée.

On rappelle que dans une telle enceinte S, les particules s'impactent sur l'une ou l'autre des plaques $P_i$ selon la valeur de leur inertie dans l'étage correspondant. Ainsi, pour un débit constant d'alimentation de l'enceinte S en aérosol et des grilles $G_i$ percées d'orifices de dimensions progressivement décroissantes de l'étage $E_1$ à l'étage $E_n$, on recueille dans les étages des lots de particules dont la granulométrie est progressivement décroissante de l'étage $E_1$ à l'étage $E_n$.

Selon la caractéristique essentielle de l'invention, un étage $E_i$ de l'enceinte S est transformé en chambre d'ionisation en vue d'une mesure directe, par l'intermédiaire de l'ensemble précité A, de l'activité des particules déposées sur le plateau $P_i$.

A cet effet, pour l'établissement d'un champ électrique entre la plaque $P_i$ et la grille $G_i$ d'un étage $E_i$, les grilles $G_i$ sont reliées à une source de tension 2 et les plateaux $P_i$ sont reliés à la masse par l'intermédiaire de l'ensemble A de détermination de l'activité des particules de l'un des étages $E_i$.

On voit sur la figure annexée que l'ensemble A se compose essentiellement d'un amplificateur 4 des impulsions de courant obtenues à la sortie $S_i$ d'un étage $E_i$, cet amplificateur étant relié aux étages $E_i$ par l'intermédiaire d'un commutateur 6, de deux ensembles de mesure de courant $B_1$ et $B_2$ reliés par l'intermédiaire d'un commutateur 8 à l'amplificateur 4 et d'un ensemble C de calcul de l'activité des particules d'un étage $E_i$.

Plus précisément, l'ensemble de mesure $B_1$ se compose de moyens $M_1$ de mise en forme des impulsions de courant obtenues en sortie de l'amplificateur 4 et de moyens $M_2$ de comptage des impulsions mises en forme tandis que l'ensemble de mesure $B_2$ est constitué de moyens M de mesure d'un courant moyen.

Le mode de mise en oeuvre du dispositif schématisé sur la figure pour l'analyse d'un aérosol est le suivant.

La mise en circulation de l'aérosol à travers l'enceinte S au moyens de la pompe P, engendre la captation par chaque plateau $P_i$ d'un lot de particules de l'aérosol d'une granulométrie donnée.

Sachant que chacune des désintégrations des particules se produisant dans l'espace plateau-grille engendre dans cet espace une ionisation produisant une impulsion de courant, la détermination par l'ensemble A de l'activité des particules d'un étage choisi $E_i$ résultera, soit du comptage pendant un temps donné d'impulsions de courant au moyen de l'ensemble $M_2$, soit de la mesure pendant un temps donné d'un courant moyen par l'ensemble M.

Bien entendu, la mesure de l'activité des lots de particules collectés nécessite un étalonnage préalable du dispositif.

On note que le dispositif de l'invention peut permettre une analyse séquentielle d'un aérosol.

A cet effet, on utilise d'une part, une pompe P séquentielle permettant des passages successifs de différents échantillons de l'aérosol et, entre deux passages d'échantillon, on effectue la mesure de l'activité des particules de chacun des étages; d'autre part, on utilise un ensemble de moyens permettant de mettre en mémoire la valeur des activités mesurées après passage d'un échantillon et d'effectuer la différence entre les activités mesurées à la suite de deux passages consécutifs d'échantillon pour l'analyse de l'activité d'un échantillon.

## Revendications

1. Dispositif d'analyse de l'activité d'un aérosol radioactif en fonction de la granulométrie de ses particules du type comportant une enceinte étanche (S), des moyens (P) pour mettre en circulation l'aérosol à travers l'enceinte et à l'intérieur de ladite enceinte, une pluralité d'etages ($E_i$) de collection de particules de l'aérosol d'une granulométrie donnée, chacun des étages ($E_i$) comprenant une plaque d'injection ($G_i$) de l'aérosol, cette plaque étant percée d'au moins un orifice calibré et une plaque ($P_i$) de collection de particules d'une granulométrie donnée, caractérisé en ce qu'il comporte des moyens (2) pour établir un champ électrique entre les plaques d'injection ($G_i$) et de collection ($P_i$) de chacun desdits étages ($E_i$) en vue de l'établissement d'un courant d'ionisation à travers un étage lors de la désintégration des particules collectées dans ce dernier, et des moyens (A) pour mesurer le courant d'ionisation de l'un desdits étages.

2. Dispositif selon la revendication 1, caractérisé en ce que lesdits moyens (A) de mesure du courant d'ionisation de l'un desdits étages ($E_i$) comportent des moyens ($M_2$) de comptage d'impulsions de courant et des moyens (6,8) pour relier ces moyens de comptage à l'un desdits étages.

3. Dispositif selon la revendication 1, caractérisé en ce que lesdits moyens (A) de mesure du courant d'ionisation de l'un desdits étages ($E_i$) comportent des moyens (M) de mesure d'un courant moyen et des moyens (6,8) pour relier ces moyens de mesure à l'un desdits étages.

4. Dispositif selon la revendication 1, caractérisé en ce que lesdits moyens (A) de mesure du courant d'ionisation de l'un desdits étages ($E_i$) comprennent des moyens (M) de mesure d'un courant moyen, des moyens ($M_2$) de comptage d'impulsions de courant et des moyens (6,8) pour relier, soit les moyens de mesure d'un courant moyen, soit les moyens de comptage d'impulsions de courant à l'un desdits étages.

## Claims

1. Apparatus for analyzing the activity of a radioactive aerosol as a function of its particle size of a type comprising an enclosed chamber (S), means (P) for circulating the aerosol through the interior of the said chamber, a plurality of collection stages ($E_i$) for aerosol particles of predetermined particle size, each of the stages ($E_i$) comprising an injection plate ($G_i$) for the aerosol, said plate being pierced by at least one calibrated orifice, and a collection plate ($P_i$) for particles of predetermined particle size, characterized in that it comprises means (2) for establishing an electrical field between the injection plate ($G_i$) and collection plate ($P_i$) of each of the said stages ($E_i$) whereby to establish an ionization current across a stage, and means (A) for measuring the ionization current of the one of the said stages.

2. Apparatus according to Claim 1 characterized in that said means (A) for measuring the ionization current of the said stage ($E_i$) comprises means ($M_2$) for counting current impulses and means (6,8) for connecting the counting means to the one of the said stages.

3. Apparatus according to Claim 1 characterized in that the said means (A) for measuring ionization current of the one of the said stages ($E_i$) comprises means (M) for measuring an average current, and means (6,8) for connecting the measuring means to the one of the said stages.

4. Apparatus according to Claim 1 characterized in that the said means (A) for measuring ionization current of the one of the said stages ($E_i$) comprises means (M) for measuring an average current, means ($M_2$) for counting current impulses and means (6,8) for alternately connecting the means for measuring average current and the means for counting current impulses to the one of the said stages.

## Patentansprüche

1. Einrichtung zur Aktivitätsanalyse eines radioaktiven Aerosols in Abhängigkeit von der Korngrösse seiner Teilchen, mit einem dichten Behälter (S), mit einer Einrichtung (P) zum Umwälzen des Aerosols durch den Behälter und innerhalb des Behälters, durch mehrere Sammelstufen ($E_i$) für Aerosolteilchen von gegebener Korngrösse, wobei jede der Stufen ($E_i$) aufweist: eine Einspritzplatte ($G_i$) für das Aerosol, die durch wenigstens eine kalibrierte Öffnung durchbrochen ist, und eine Sammelplatte ($P_i$) für Teilchen von gegebener Korngrösse, gekkennzeichnet durch eine Einrichtung (2) zur Errichtung eines elektrischen Felds zwischen den Einspritzplatten ($G_i$) und den Sammelplatten ($P_i$) jeder der Stufen ($E_i$) zur Erzeugung eines durch eine Stufe verlaufenden Ionisierungsstroms während des Zerfalls der in letzterer gesammelten Teilchen, und durch eine Einrichtung (A) zur Messung des Ionisierungsstroms einer der Stufen.

2. Einrichtung nach Anspruch 1, dadurch gekennzeichnet, dass die Einrichtung (A) zur Messung des Ionisierungsstroms einer der Stufen ($E_i$) eine Einrichtung ($M_2$) zur Zählung von Stromimpulsen und eine Einrichtung (6,8) zur Verbindung der Zähleinrichtung mit einer der Stufen aufweist.

3. Einrichtung nach Anspruch 1, dadurch gekennzeichnet, dass die Einrichtung (A) zur Messung des Ioinisierungsstroms einer der Stufen ($E_i$) eine Einrichtung (M) zur Messung eines mittleren Stroms und eine Einrichtung (6,8) zur Verbindung dieser Messeinrichtung mit einer der Stufen aufweist.

4. Einrichtung nach Anspruch 1, dadurch gekennzeichnet, dass die Einrichtung (A) zur Messung des Ionisierungsstroms einer der Stufen ($E_i$) eine Einrichtung (M) zur Messung eines mittleren Stroms, ein Einrichtung ($M_2$) zur Zählung von Stromimpulsen und eine Einrichtung (6,8) aufweist, die entweder die Einrichtung zur Messung eines mittleren Stroms oder die Einrichtung zur Zählung der Stromimpulse mit einer der Stufen verbindet.